# EUROPEAN PATENT APPLICATION

(11) **EP 4 000 999 A1**
(43) Date of publication of application: **25.05.2022**
(21) Application number: 21215061.9
(22) Date of filing: 24.08.2018
(51) Int. Cl.: B60L 53/65, B60L 53/14

(54) **DEVICE AND METHOD FOR CHARGING ELECTRIC VEHICLES AS WELL AS DEVICE FOR DATA PROCESSING AND COMPUTER PROGRAM PRODUCT**

(30) Priority: 24.08.2017 DE 102017119414
(62) Divisional of application: 18759317.3
(71) Applicant: Wirelane GmbH, 80539 Munich (DE)
(72) Inventor: HINKELMANN, Konrad, 80539 Munich (DE); SCHWAAB, Constantin, 80539 Munich (DE); QUINT, Stephan, 80539 Munich (DE)
(74) Representative: Sonnenberg, Fred

(57) **Abstract**

The present invention relates to a charging device for transferring electrical energy to at least one energy receiver, the charging device having at least one energy transferring device for coupling with a corresponding energy receiving device of the energy receiver, wherein the charging device further comprises at least one detection device, which is configured to determine the presence of at least one pre-defined first object in at least one surrounding region of the charging device (1, 1', 1", 1‴, 1^{iv}); as well as to a method for operating charging device, in particular one according to the invention; a device for data processing; a computer program product; and a computer-readable medium.

## Description

The present invention claims priority of DE 10 2017 119 414.2 filed on 24 August 2017 and is a divisional application of EP 18759317.3 filed on 24 August 2018, the contents thereof being incorporated by reference.

The present invention relates to a charging device for transferring electrical energy or power to an energy receiver, the charging device having at least one energy transferring device for coupling with a corresponding energy receiving device of the energy receiver.

With currently deployed charging devices, in particular charging stations for energy receivers in the form of e-mobiles or electric vehicles, the availability of at least one parking lot and/or parking space in at least one surrounding region of the charging device for at least one energy receiver, and, additionally or alternatively, the availability of at least one energy transferring device comprised in the charging device, in particular in the form of at least one charging point, often are insufficiently predictable for a user, or a reservation made for one of such proves to be unreliable.

Conventional monitoring of the occupancy state of the surrounding region, such as a parking lot or a parking space, and/or of the energy transferring device, by means of mechanical components or the monitoring of energy flowing from the charging device to the energy receiver, cannot provide sufficient information on the factual availability of the surrounding region and/or the energy transferring device for the energy receiver, in other words of the blockage or occupancy by another energy receiver or another object. Unlawfully parked objects, in particular vehicles with a combustion engine, or objects, in particular electric vehicles, the charging process of which has been completed, and which block the surrounding region and/or the energy transferring device after completion of the charging process, can thereby not be assessed. If, however, a reliable assessment regarding the factual occupancy state of the surrounding region and/or the energy transferring device cannot be made, it is not possible to reliably and efficiently provide services in connection with e-mobility. For example, it is of major importance to be able to convey to the user the occupancy state in real time due to scarcity of charging infrastructure and its use over typically several hours. Therefore, the user has a great interest in reliable information on the present availability of charging devices in his neighbourhood. The need for information does not only relate to ongoing charging processes at corresponding charging devices, but also to whether the surrounding regions and/or energy transferring devices are effectively available and thus accessible. For instance, once reserved via an APP by the user, the status of a charging device might change from "available" to "unavailable" due to obstruction. In such a case, the user wants to be informed about the change of status in order to be able to adjust his itinerary with due notice. An APP would suggest a factually available alternative charging device to the user.

Furthermore, state-of-the-art hardware or peripheric devices, connectable to, but not fully removable from the charging device, are often sources of risk of injury for the user, e.g. the risk of stumbling over power cords. Also, the process of authentication, authorization and/or invoicing the energy obtained during a charging process often proves to be complicated, insecure and little user-friendly.

Therefore, an object of the present invention is to provide a charging device and a method of operating a charging device, which overcomes the disadvantages of the prior art and enables the user to reliably reserve, and to handle the charging device in a secure and user-friendly way., This includes likewise secure and comfortable options of authentication, authorization, and payment.

The invention solves this object according to a first aspect by providing a charging device for transferring electrical energy to at least one energy receiver. The charging device comprises at least one energy transferring device to be coupled with a corresponding energy receiving device of the at least one energy receiver. The charging device further comprises at least one detection device that is configured to determine the presence of at least one pre-defined first object in at least one first surrounding region of the charging device.

It is preferred that in the first surrounding region the geometrical arrangement of the energy receiver is provided during the charging process.

In a preferred embodiment, the detection device comprises at least one sensor.

The sensor may comprise at least one transmitter for transmitting electromagnetic waves or sound waves. In a preferred embodiment, the at least one sensor comprises at least one RADAR transmitter for transmitting RADAR waves. A modulated continuous wave RADAR transmitter, in particular a frequency modulated continuous wave RADAR transmitter, or a pulsed RADAR transmitter enables spatial recognition of a first object.

In alternative embodiments, the sensor may comprise a LIDAR, a SONAR, an infrared, and/or an ultrasonic sensor, and/or a first image recognition device, in particular for optical image recognition, wherein preferably the first image recognition device comprises at least one first camera, in particular one first stereoscopic camera.

In a preferred embodiment, the charging device has a housing that has a roundish shape. A roundish housing is less prone to vandalism by providing fewer weak points. The roundish shape of the housing enables reducing the number of holes, slits or ridges of the housing.

In a preferred embodiment, the charging device has a housing that has a closed shape. A closed housing provides improved protection against environmental conditions. The closed housing may have no holes or apertures. The housing may be a monolithic or one-piece unit. The housing may further be mountable as a modular unit.

In a further preferred embodiment, the charging device has a roundish and closed housing. The roundish and closed shape of the housing enables reducing the number of holes, slits or ridges of the housing.

According to the invention, the sensor may further comprise at least one receiver for receiving electromagnetic waves or sound waves. The at least one transmitting device and/or the at least one receiver may be in the form of an array. Such an array preferably comprises at least one transmitting antenna, in particular configured for the microwave frequency range; at least one laser emitter, in particular a laser diode; a light-emitting diode, in particular an infrared and/or ultraviolet light-emitting diode; and/or at least one loudspeaker, in particular an ultrasonic loudspeaker; and wherein preferably the receiver comprises at least one receiving antenna, which is in particular configured for the microwave frequency range; at least one photographic detector, in particular for light in the infrared and/or ultraviolet frequency range; at least one camera; and/or at least one microphone, in particular an ultrasonic microphone.

In a further embodiment, the sensor may comprise a transceiver that comprises the at least one transmitter and the at least one receiver.

It is further particularly preferred that the detection device is configured to compute and/or to generate, depending on a second object, recognized within the first surrounding region, at least one first signal, wherein the first signal can take and/or represent preferably a binary value, and/or wherein the first signal is usable as a statement regarding at least one occupancy state of the first surrounding region by the first object.

In the previously mentioned embodiment it is particularly preferred that, when computing and/or generating the first signal, at least one second signal is evaluable and/or useable, which is generated by the sensor and/or the first image recognition device, in particular based on an evaluation of at least one image captured by the first camera, wherein preferably the second signal comprises information regarding at least the position, the size, the duration of stay, the movement, and/or the profile of the movement of the second object, which is in particular in the first surrounding region, and/or, for recognition of the occupancy of the first surrounding region by the first object, the second signal is comparable with at least one predetermined value of the first object, preferably a plurality of second signals is comparable with a plurality of predetermined values of the first object.

The invention also proposes that a plurality of first objects, differing in a geometric and/or dynamic characteristic, is recognizable by means of the detection device.

It is particularly preferred that a plurality of first surrounding regions is provided, and/or the first surrounding region and/or at least one of the first surrounding regions is defined by at least one, preferably two, or a plurality of angular ranges about, and/or distance ranges from, the charging device, the detection device, the sensor, and/or the camera, wherein in particular the angular range is an angular range in a horizontal or reference plane, and/or in a plane that is at least in regions substantially parallel to at least one surface of the first surrounding region; and the angular range is preferably defined by a start angle and an end angle, wherein in particular the start angle and/or the end angle are azimuthal or polar angles.

In the two previously mentioned embodiments, it can be preferred that the presence of a plurality of first objects in the first surrounding region and/or the presence of a first object and/or of a plurality of first objects in the first surrounding region is recognizable by the detection device independently from further first surrounding regions.

The invention further proposes that the detection device is configured such that the size of the first surrounding region, in particular the angular range and/or the distance range, monitored by the detection device and/or the sensor, is variable, and/or the number of the first surrounding regions, monitored by the detection device and/or the sensor, is variable.

Alternatively or additionally to the previously mentioned first aspect or the advantageous configurations thereof, the charging device according to the invention can be characterized in that the energy transferring device comprises at least one charging cable, having in particular, preferably at at least one end of the charging cable, at least one connecting device, in particular a male and/or female plug, such as a Type 2 plug, at least one CCS, and/or at least one ChaDemo plug, for directly or indirectly establishing at least one electrically conducting connection for energy transfer between the charging device and the energy receiver.

In the previously mentioned embodiment, it is particularly preferred that the charging device comprises at least one cable retracting device, in particular for winding up the charging cable, in particular on at least one cable drum, comprised by the charging device; and/or for retracting at least one part of the charging cable into the charging device, in particular the housing of the charging device.

In the previously mentioned embodiments, it is particularly preferred that the charging cable is formed to have, at least in sections, the shape of a spiral.

The invention also proposes that the energy transferring device is configured to directly or indirectly establish an inductive connection for energy transfer between the charging device and the energy receiver.

It is further particularly preferred that the charging device has at least one exit opening, in particular an exit opening of the energy transferring device and/or a housing of the charging device; at least one sealing lip for protection against entering humidity and/or water; and/or that the energy transferring device is, at least in regions, surrounded by at least one conservation housing, in particular the housing of the charging device.

The charging device according to the invention can further be characterized by at least one controlling and/or regulating device, which in particular is comprised by the detection device, and which is configured to generate and/or transmit, in particular to at least one remote computer and/or at least one local receiver, a third signal, in particular dependently on the determined occupancy state and/or of the at least one state of the energy transfer to the energy receiver.

Alternatively or additionally to the previously mentioned first aspect and/or second aspect, or the advantageous configuration thereof, the charging device according to the invention can further be characterized in that the charging device comprises at least one first illumination device, in particular for the at least partial and/or coloured illumination of at least one second surrounding region, which preferably is, at least in regions, comprised by the first surrounding region, is identical with the first surrounding region, comprises at least partially the first surrounding region, and/or comprises at least one bottom region in front of the charging device; and/or in that the charging device comprises at least one second illumination device, in particular for the at least partial and/or coloured illumination of at least one, in particular front, rear, and/or side, region, which in particular is a surface region, of the housing; of a supporting structure, on which the charging device is arranged, such as a wall; and/or of the charging device.

It is particularly preferred that the first illumination device comprises at least one first lighting means, in particular in the form of at least one first light-emitting diode, and/or at least one first optic; and/or that the second illumination device further comprises at least one second lighting means, in particular in the form of at least one second light-emitting diode, and/or at least one second optic.

In both previously mentioned embodiments, it is further proposed that, by means of the first illumination device and/or the second illumination device, at least one first information is projectable, in particular onto at least one surface of the first surrounding region; of a plurality of first surrounding regions; of the supporting structure; of the second surrounding region; and/or of the charging device, wherein preferably the information comprises at least partially at least one image element and/or at least one text element, and/or the information is receivable and/or retrievable from at least one remote computer, preferably by means of the controlling and/or regulating device.

It is further preferred that the charging device comprises at least one proximity sensor. In a preferred embodiment, the proximity sensor comprises at least one continuous wave Doppler RADAR transmitter. The continuous wave Doppler RADAR transmitter enables the detection of a third object that moves.

The proximity device may be comprised and/or formed, at least in regions, by the detection device, the proximity sensor being configured to generate at least one fourth signal, dependently on the presence and/or approximation, in a third surrounding region of the charging device, of the at least one third object, in particular corresponding to the first object and/or at least one user, wherein preferably the third surrounding region is comprised, at least in regions or completely, by the first surrounding region and/or the second surrounding region, comprises, at least in regions or completely, the first surrounding region and/or the second surrounding region, and/or is identical to the first surrounding region and/or the second surrounding region.

It is particularly preferred that the proximity sensor comprises at least one second image recognition device, in particular for optical image recognition; at least one first capacitive sensor; and/or at least one RADAR, LIDAR, SONAR, infrared, and/or ultrasonic sensor; wherein preferably the second image recognition device comprises at least one second camera, in particular one second stereoscopic camera.

It is particularly preferred that the first illumination device and/or the second illumination device, preferably depending on at least one value of the fourth signal and/or the determination of a third object, having approximated or approximating in the third surrounding region of the charging device, is/are switchable; from a first illumination state, regarding in particular brightness, colour, images, and/or text, in particular a switched-off illumination state, and/or a first dimmed illumination state; into a second illumination state, regarding in particular brightness, colour, images, and/or text, in particular a switched-on illumination state and/or a second dimmed illumination state, which preferably has a greater brightness than the first dimmed illumination state.

Alternatively or additionally to the previous first aspect, second aspect, and/or third aspect, or the advantageous configurations thereof, the charging device according to the invention may be further characterized in that the charging device comprises at least one indicator and/or input device, wherein preferably the indicator and/or input device is arranged at least in regions within a housing of the charging device, wherein in particular the housing comprises at least in regions, in the region of the indicator and/or input device, at least one housing section that is, in particular compared to at least one adjacent housing section, more thin-walled and/or more semi-transparent.

It is particularly preferred that the indicator and/or input device is touch-sensitive; and/or is formed in the form of at least one pixel matrix display and/or in the form of at least one touch display; is formed in the form of, and comprises, at least one second, in particular capacitive, sensor , which in particular corresponds to the first capacitive sensor, wherein preferably the indicator and/or input device and/or the second sensor is configured to recognize gestures, in particular for controlling the charging device and/or the indicator and/or input device, comprises at least one third lighting device, in particular having at least one third light-emitting diode, and/or comprises the more thin-walled and/or more semi-transparent housing section that is in particular light-transmissive by means of the third lighting device.

In the two previously mentioned embodiments, it is particularly preferred that, by means of the indicator and/or input device, information may be indicated to the user. The information may comprise at least one image and/or text.

It is also proposed that, in particular depending on at least one value of the fourth signal and/or on the determination of the third object approximating in the third surrounding region, the indicator and/or input device is transferrable from at least one first operating state, in which the indicator and/or input device preferably is substantially inactive, to at least one second operating state, in which the indicator and/or input device is preferably at least partially active.

Alternatively or additionally to the previously mentioned first aspect, second aspect, third aspect, and/or fourth aspect, or the advantageous configurations thereof, a charging device according to the present invention may further be characterized in that the charging device further comprises at least one sensing device, which is configured to recognize at least one identification element of the user, for execution, initialization, preparation, and/or finalizing an authentication and/or authorization of the user, and/or of at least one payment transaction.

It is particularly preferred that the identification element comprises at least one NFC, RFID, credit, debit, and/or EC card; at least one access confirmation for a building and/or a part of a building, in which the charging device is arranged, such as a parking ticket of a car park, in which the charging device is arranged; at least one electronic device such as a smart phone, a hard token, an electronic key; and/or at least one body part such as a fingerprint, the iris of an eye, and/or a face; and/or at least one element based on blockchain technology, i.e. the use of a public ledger to identify a user and to conduct the transfer of assets, typically termed tokens or, in case of a derivate function to a currency, termed coins, and/or that the sensing device enables a communication with the identification element via at least one radio interface, in particular Bluetooth, Wireless LAN, Near Field Communication (NFC), and/or Radio Frequency Identification (RFID).

In the above-mentioned embodiments, it is particularly preferred that the sensing device comprises at least one RFID module, at least one card reader, at least one scanner, in particular a barcode scanner, iris scanner, and/or fingerprint scanner, at least one chip card reader, at least one magnetic card reader, at least one inductive sensor, at least one touch-sensitive display, and/or at least one keyboard.

It is also proposed that the sensing device has, preferably by means of the controlling and/or regulating device, an at least indirect data connection with a remote computer, the indicator and/or input device, and/or at least a mobile application ("APP"), in particular for indicating, inputting, receiving, transmitting, and/or retrieving of instructions, in particular ones necessary for executing the authentication and/or authorization of the user and/or of the payment transaction, of user requests, and/or of data.

It is particularly preferred that the charging device further comprises at least one clearance device that is, in particular depending on at least one result of at least one of the authentication and/or the authorization of the user, executed in particular by means of the sensing device, configured to clear the energy transferring device, in particular the charging cable, for use, in particular for partial extraction from the charging device, by the user, preferably by clearing an opening region within the conservation housing.

It can also be provided that the charging device comprises at least one data communication device that is in particular operatively connected to, and comprised by, the controlling and/or regulating device, wherein in particular, by means of the data communication device, a connection to the remote computer, to the mobile application ("APP"), to at least one data server, at least one application server, at least the Internet, and/or at least one Intranet, is establishable, and/or a data communication by means of mobile telephony, in particular GPRS, GS3, GS4, and/or LTE; by means of WLAN ("WiFi"), LAN, Bluetooth, and/or satellite communication, is executable.

Finally, it is proposed for the charging device that the charging device comprises and/or embodies a charging station, and/or the energy receiver comprises and/or embodies a motor vehicle, in particular at least one electric or hybrid vehicle.

The object relating to the method is solved according to the invention by a method for operating a charging device, in particular one according to the invention, for transferring electric energy to at least one energy receiver, wherein the charging device, by means of at least one data communication device, is connected with at least one data server, a mobile application ("APP"), and/or a remote computer, and, by means of the data communication device, status information of the charging device and/or user data are conveyed to the data server, the mobile application ("APP"), and/or the remote computer.

It is particularly preferred that the status information comprises geographical data representing the location of the charging device, in particular GPS data of a GPS module of the charging device; a number of energy transferring devices comprised by the charging device; characteristics of a first surrounding region provided for the corresponding energy transferring device and for the arrangement/position of the energy receiver, such as size, form, inclination, and/or reachability via at least one access path; the occupancy of at least the first surrounding region of the charging device with at least one first object and/or a second object differing from the first object, in particular based on a first signal and a second signal; the reservation state of the charging device, in particular of the energy transferring device; information regarding an energy transfer process to the energy receiver, in particular the transmitted power/current, duration of the energy transfer, begin of the energy transfer, end of the energy transfer, in particular based on at least one third signal; the state of the energy transferring device, such as that the energy transferring device is connected to the energy receiver, a charging cable of the energy transferring device is at least partially extracted, in particular from a cable pulling device, or substantially completely retracted; the state of at least one first illumination device and/or a second illumination device, such as an illumination state regarding the illumination device being active or inactive, and/or information regarding an element projected by means of the first illumination device and/or the second illumination device; measurement data of at least one proximity sensor; and/or the state and/or data of an input and/or output device of the charging device; and/or the user data; authentication data and/or authorization data of a user that are preferably recorded by means of a sensing device of the charging device.

In both of the previously mentioned embodiments, it is also proposed that the status information and/or the user data are generated and/or conveyed by means of a regulating and/or controlling device of the charging device, and/or that the status information and/or the user data are combined and/or compared with further local data, in particular stored in the remote computer and/or at least one mobile device, such as a smart phone and/or a tablet PC, the mobile device being connected to the remote computer and/or the data server.

The invention proposes in particular that, for execution of a reservation of the charging device, the occupancy state of the charging station is compared with a set point, wherein a reservation of the charging device is solely possible in case of accordance with the set point; the geographical data representing the location are combined with map data, in particular for displaying to a user a map with the location of the charging device, preferably in combination with the occupancy state of the charging device; and/or the status information of the charging device, in particular the reservation state of the charging device, is changed to the set point after selection of the charging device by the user.

The method can further be characterized in that, for execution of an energy transfer to the energy receiver, the user data are matched against local data, in particular data regarding a credit of the user, data of a bank connection of the user, data of a bank account, , data of the blockchain wallet of the user, data regarding a mode of the energy transfer, such as maximal allowed power, maximum transfer duration, and/or, in particular financial, conditions of the energy transfer; and that in case of accordance, in particular of determination of sufficient credit and/or sufficient cover of the user account, or the user wallet, an initiation of an energy transfer is cleared.

In the previously mentioned embodiment, it is particularly preferred that, in case of clearance of the energy transfer, data regarding the mode of the transfer are at least partially sent to the charging device.

Finally, it is proposed for the method that upon termination of the energy transfer, it is checked whether the executed energy transfer is in accordance with the defined mode, wherein in case of deviation from the mode, for example in case of excess of the maximum power, of the maximum transfer duration, and/or of occupancy of the charging device after termination of the energy transfer, the user is charged with penalty costs. In case of the use of a blockchain wallet, the application of such penalty cost may be executed by using a smart contract, that is an inherent software element stored within the blockchain application and activated upon the occurrence of certain pre-defined events such as excess of charging time.

The invention further provides a device for data processing, comprising means for executing a method according to the invention.

It is preferred that the device is formed as a data server, mobile device, PC, laptop, computer, charging device, in particular a charging device according to the invention, and/or computer remote from the charging device.

The invention is further directed to a computer program product, comprising commands or smart contracts that, when executed by a device for data processing, in particular one according to the invention, prompt the device to execute the method according to the invention.

The invention hereby proposes that the commands or smart contracts are at least partially stored in the charging device according to the invention, a computer remote from the charging device, a data server, and/or a mobile device, and/or on a blockchain.

Finally, the invention provides a computer-readable medium, comprising commands or smart contracts that, when executed by a device for data processing, in particular one according to the invention, prompt the device to execute the method according to the invention.

The invention according to the first aspect is therefore based on the surprising insight that by providing a detection device in a charging device, a presence of at least one predefined first object in at least one first surrounding region of the charging device may be determined, and an occupancy state of the first surrounding region may thereby be detected. The occupancy state thereby provides in particular information regarding whether, for an energy receiver to be charged, there is sufficient parking space within the first surrounding region of the charging device. The charging device has thereby been shown to be particularly advantageously deployable for a plurality of deployment scenarios when the first surrounding region to be monitored is defined by at least one angular and/or distance range, whereby, depending on the scenario, merely one single, two, or even a plurality of first surrounding regions may be advantageously monitored by merely defining the angular and/or distance ranges according to the on-site situation. The angular range can thereby be adjusted to the number of energy transferring devices of the charging device. For example, two charging cables may be present, and two parking lots in front of the charging device may thus be monitored regarding their occupancy. It is further also possible to adjust the first surrounding regions depending on parameters of the energy receiver to be charged, for example the type of the energy receiver, e.g. a passenger car, motorcycle, or utility vehicle, or even the geometrical dimensions of the energy receiver. An adjustment may further be made depending on an object detected in front of the charging device. A scenario may for example arise that part of a parking space, dimensioned for a passenger car, is occupied or blocked by an unlawfully parked object. The remaining space would, however, be sufficient to park a motorcycle for charging by means of the charging device. In this case the invention enables the adjustment of the first surrounding region to this remaining space, and the charging device is recognized as not being occupied for a motorcycle, and, however, as being occupied for a passenger car.

The angular range is thereby understood to be in particular an angular range in a horizontal/polar plane, and/or a plane that is substantially at least partially parallel to at least one surface of the corresponding first surrounding region. The angular range is thereby preferably defined by a first angle, in particular a start angle, and a second angle, in particular an end angle, in particular by an azimuth angle (polar angle?).

The inventors have further recognized that by means of the detected occupancy state, it is possible to reliably provide to a user information regarding the availability of the first surrounding region, and to propose to the user in case of high occupancy or unexpected events regarding the availability of the first surrounding region, possibly at an early stage, alternative charging devices in the surrounding. The efficiency of occupancy of the charging infrastructure, which may comprise a plurality of such charging devices, increases as a whole, and unnecessary appearance of the user at factually not, not any more, or not yet available charging devices may be avoided, whereby energy consumption is decreased, and the environment is cared for.

It was in particular recognized that, by including further parameters such as size, movement, movement profile, and/or duration of stay of the recognized second object, and comparison with parameters of the predefined first object in the first surrounding region, a much more precise statement and prognosis regarding the occupancy state of the first surrounding region can be made due, in particular, to not being restricted to regard the mere presence of any kind of object and rather determining sort and type of the object, and thereby concluding the further usability of the first surrounding region for parking the energy receiver. It may, for example, be recognized that, on the one hand, an object is arranged in the first surrounding region and that, on the other hand, this object subsequently moves out of the first surrounding region. It can further, in particular based on a second signal generated by one of a sensor and/or image recognition device, be recognized that, on the one hand, a stationary object is arranged in the first surrounding region and that, on the other hand, this can be removed by a user without any problems before arranging the energy receiver in the first surrounding region for connection with the charging device or the energy transferring device. In case such objects are recognized, a first signal is generated, which represents an occupancy state indicating that the first surrounding region is available for any kind of energy receiver or rather for specific energy receivers, and thus is not occupied. In other words, the second object is a sensed object before having been identified and/or classified. It will become a first (predefined) object after having been analyzed and (based, for example, on the stored definitions/parameters) assigned to a specific type of object or a specific class of objects.

In contrast to further conventional criteria, used in the prior art, for recognition of an occupancy of the charging device, such as the presence of a connected between the charging device and the energy receiver; of a position of a flap of the charging device; of a cable, locked at the charging device and/or the energy receiver; and/or the result of a measurement or (non-) determination of an electric current; the invention enables making a more reliable and, to the conditions in the surroundings, better adjustable statement regarding the occupancy state. Rather a classification of the object can be made, and a statement regarding the factual restriction, due to the presence of the object, of the availability of the first surrounding region can thereby be made. It is thus possible to recognize a plurality of different predefined first objects and to infer their possibly different effect on the occupancy state for a corresponding specific energy receiver. The further conventional criteria used in the state of the art can thereby obviously be additionally considered in the determination of the occupancy state.

The invention regarding the second aspect, the features of which may be implemented additionally or alternatively to the features of the previously explained first aspect of the usage of a detection device and the preferred embodiments thereof, is, in the first instance, based on the surprising insight that the providing of an energy transferring device, integrated into the charging device and/or comprised by the charging device, in particular in the form of a charging cable, renders dispensable the carrying of a corresponding means by the user, and that a storage of the charging cable after the charging operation is omitted, whereby time is spared and the comfort for the user is increased.

By providing further at least one cable retracting device, comprises by the charging device, the inventors surprisingly found that contamination of the energy transferring device, in particular of the charging cable, can be effectively prevented. The charging cable may be, in a sufficiently long implementation, configured uniformly for all charging devices, and it can be ensured that also in cases in which the charging device is distanced far away from the first surrounding region, a connection with the energy receiver can be established. The cable retracting device ensures in any case that the cable is extracted from the charging device no more than necessary. This prevents reliably, that, due to the length of the cable, a part of the cable comes into contact with the ground, after connecting with the energy receiver, and thereby becomes dirty. Transfer of this dirt onto hands and parts of the energy receiver, in particular an inner space thereof, is thereby furthermore prevented.

It has been recognized that the attainment of these advantages, as offered by the cable retracting device, can be further supported, or, independently of the usage of a cable retracting device, can be achieved, by forming the charging cable at least in sections in the shape of a spiral. With a spirally formed cable, contact with the ground and contamination caused thereby can be prevented both in case of winding up, by means of the cable retracting device, and of otherwise storing the cable. Providing the cable only up to a required length or there being no contact of the cable with the ground is ensured in both cases. A contamination of the cable is thus reliably prevented.

The invention regarding the third aspect, the features of which can be implemented additionally or alternatively to the features of the previously described first aspect and/or second aspect, is based on the surprising recognition that, by the providing of a first and/or second illumination device, the first and/or at least one second surrounding region of the charging device as well as the charging device itself or a supporting structure, at which the charging device is arranged or attached, can be illuminated at least in regions, in particular mono-chromatically, multi-chromatically, and/or with alternating colours. The risk of stumbling in the region about the charging device, in particular in the first and/or second surrounding region, can thereby be considerably and surprisingly be reduced in a particularly simple and reliable manner. The operation of the charging device as well as in particular the handling of the hardware of the charging device, for instance for establishing a connection between the charging device and the energy receiver, can furthermore be significantly simplified, and more safety and comfort can be achieved for the user.

Furthermore, information can be projected by the first and/or second illumination device, in particular onto a surface of the first and/or second surrounding region or of the charging device, for simplifying for the user an optimal positioning of the energy receiver for the energy transfer by corresponding projected instructions, and for increasing thereby the safety and the comfort.

The recognisability of the charging device can thus be improved for an approaching user.

The invention regarding the fourth aspect, the features of which are implemented additionally or alternatively to features of the previously described first aspect, second aspect, and/or third aspect, is based on the surprising insight that by providing a first indicator and/or input device, a particularly advantageous and inexpensively manufacturable display can be provided, wherein the indicator and/or input device is arranged at least in regions within the housing of the charging device in a thin-walled and/or semi-transparent portion of the housing of the charging device. On the one hand, protection of the indicator and/or input device against environmental impact such as rain or snow is thereby provided. Furthermore, the indicator and/or input device is not or merely with difficulties recognizable in an inactive state. In contrast to the large-area displays, fitted at the exterior side and known from the state of the art, the indicator and/or input device provides less cause for destruction of the display by vandalism.

In case of multiple charging devices in one location, an illumination device can be used to signal to the user which charging device was previously chosen within the App. This can be achieved by emitting a flashing signal by means of illuminating the illumination device once a pre-defined function within the App is executed by the user.

In the configuration as an indicator and input device, a possibility to provided information to the user as well as to receive input from the user, and thus to offer to the user an inactive usage of the charging device, can be provided.

The inventors have recognized that it is particularly and surprisingly advantageous to configure the indicator and/or input device to be touch-sensitive and/or as a so-called pixel matrix display, and/or to configure the indicator and/or input device to be in the form of, and/or to comprise at least one capacitive sensor , whereby an indicator device enabling all the previously mentioned functionalities is provided that is simultaneously particularly robust and thereby particularly well protected against vandalism. Thereby the reliability of the charging device as a whole may be increased as well as the maintenance and repair costs are considerably reduced. In addition, gesture recognition and control of the charging device and/or the indicator and/or input device by gestures is possible, whereby not only the operating comfort for the user is increased but vandalism is further prevented as the providing of exposed elements is not required.

The invention regarding the fifth aspect, the features of which can be implemented additionally or alternatively to the features of the previously described first aspect, second aspect, third aspect, and/or fourth aspect, is based on the surprising insight that by providing a sensing device an authentication and/or authorization of the user as well as a payment transaction may be particularly easily initiated, executed, and/or prepared. In particular in the case of providing a radio frequency identification module (RFID), the corresponding (credit) cards can be recognized and/or read, and new payment functionalities, requiring an interaction with at least one user device such as a smart phone (e.g. for Apple^{®} Pay), can be easily implemented and provided to the user, whereby the comfort of the operation of the charging device and the acceptance thereof can be considerably increased. Enabling an easy and comfortable authorization and payment operation is of major importance regarding the acceptance of electric mobility. Furthermore, an authentication and/or authorization of the user, in particular for clearing the obtainment of energy, can be implemented in a particularly comfortable, secure, and efficient way, together with or alternatively to the payment transaction.

In this context, the inventors have surprisingly found that the deployment of a clearing device can be used for increasing security and for preventing vandalism due to clearance of the energy transferring device, in particular the charging cable, occurring only after authentication and/or authorization of the user. Unauthorized removal of the charging cable from the charging device and/or misuse (e.g. knotting the cable with objects) can thus be effectively prevented.

The inventors have found to their surprise that the individual aspects of the invention are as such usable in a preferred embodiment of the charging device according to the invention and can furthermore be combined in any manner with one another, whereby it is easily possible to implement an optimal and particularly advantageous embodiment for any use purpose.

The charging device according to the invention as well as the method according to the invention enable furthermore that, by means of a computer program, such as a mobile application ("APP") on a mobile device, such as a smart phone, the charging device can be localized and reserved, a charging operation can be authorized as well as paid, and overdrawing of charging operations regarding time and/or power/energy can be sanctioned. Provision of a uniform portal is in particular enabled for representing all operations required for the use of the charging device and the charging infrastructure connected thereto.

A charging device according to the invention may be found by means of for example a map service. To this end, the charging device with the geographical data thereof, for example GPS data, is fed into a data base of a data server, which is accessible by the APP, at the time of the installation. The charging device preferably comprises to this end an own GPS receiver and transfers the geographical data autonomously at registration at the data base. Changes of the charging device can in this way be tracked, and the data base can be synchronized.

The localized charging options can thereupon be reserved by a user by means of an APP. During the time of reservation, the registration at the reserved energy transferring device of the charging device is not possible for other users. The reservation is executed by data transfer from the APP via the data server. As soon as the user arrives at the charging device, an authorization of the user by means of the APP or RFID card is possible. The APP accesses the data server, on which client data are stored. A comparison with the client data enables controlling which client is authorized for which charging device under which conditions. Should the client overdraw the charging operation, this is automatically sanctioned by means of the APP and the client account is charged. Extra parking time without active charging operation is charged to the client by payment of a penalty.

Further features and advantages of the invention become obvious from the following description, in which preferred embodiments of the invention are explained by means of schematic drawings.
Figure 1 shows a charging device according to a first embodiment of the invention;
Figure 2a shows a charging device according to a second embodiment of the invention;
Figure 2b shows a charging device according to a third embodiment of the invention;
Figure 2c shows a charging device according to a fourth embodiment of the invention; and
Figure 3 shows a charging device according to a fifth embodiment of the invention.

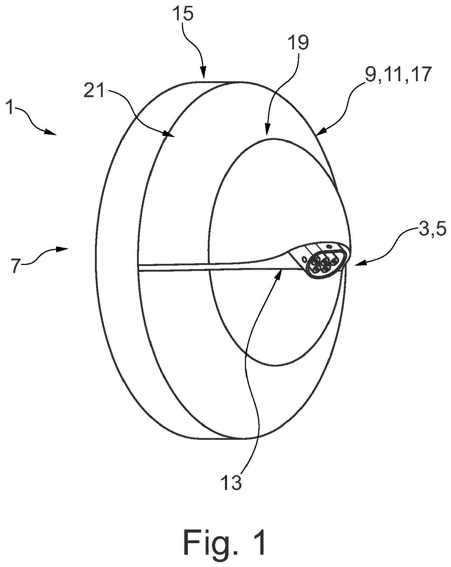

Figure 1 shows a charging device 1 according to the invention, referred to as 1, in a first embodiment. The charging device comprises at least one energy transferring device 3, in particular in the form of at least one charging cable, of which in Figure 1 a connecting device 5, in particular in the form of a female plug, is visible that is in particular arranged at an end of the charging cable. The remaining part of the energy transferring device 3 is located in an inner space of a housing 7 of the charging device 1, wound onto a cable drum (not shown in Figure 1), and comprised by the charging device 1.

In a preferred embodiment, the housing 7 has a roundish base, having a similar shape to a cooking pot and being made in a monolithic or one-piece manner. The housing 7 has no holes, slits or ridges. All control and visual elements for human-machine-interaction (HMI) are integrated within the housing 7, more particularly in a dedicated small area providing for easy access. Visual feedback is conveyed to the user by means of the translucent material of the housing 7. User input is implemented either by capacitive or optical elements (i.e. in a contactless manner). A front portion (or lid) of the housing 7 faces the user and consists of a closed surface.

For ensuring the housing to be waterproof, the front portion (or lid) of the housing 7 is screwed to the base by a bayonet fitting, which supports the clamping of an intermediate sealing. The housing 7 can be opened by a rotary motion. Locking of the housing 7 can be easily achieved by blocking the rotation with a small bar or bolt, which is driven by a motor, motorized lock, magnetic coil, temperature activated alloys, or by other means.

Due to its geometry, the housing is sealed with a single elastic ring. Tightness is ensured by bayonets which tighten the lid to the base body perpendicularly to the direction of rotation. Any additional sealing elements are not required based on the shape of the housing 7. Moreover, no additional exposed screws are required, making the charging device 1 more secure with respect to intruders.

For reducing the risk of falling, the lid can be easily secured by a short elastic band such as textile strap or belt, which allows rotating but also flipping. Due to its low weight, the use of any hinge is unnecessary, and positioning can be easily indicated by markers.

The charging device 1 further comprises at least one detection device 9, which in turn comprises at least one sensor 11, which in the present embodiment preferably comprises at least one RADAR sensor. The detection device 9 is configured to monitor at least one first surrounding region of the charging device 1, and to determine or detect the presence of at least one predefined first object, within the first surrounding region, such as vehicles like combustion or electric cars, motorbikes, electric bikes, mechanical bikes, litter, or any other object possibly blocking the first surrounding region.

In a preferred embodiment, the sensor 11 comprises at least one transmitter for transmitting electromagnetic waves. The at least one transmitter preferably is a RADAR transmitter. The at least one RADAR transmitter may be a modulated continuous wave RADAR transmitter or a pulsed RADAR transmitter. The modulated continuous wave RADAR transmitter may in particular be a frequency modulated continuous wave (FMCW) RADAR transmitter. The RADAR transmitters may work in the frequency ranges of approximately 21-27GHz (ultra-wide band, UWB), 60-62GHz, 76-81 GHz (long range radio, LLR), and 121 -123 GHz. The RADAR transmitters enable obtaining spatially resolved information about the monitored first surrounding region of the charging device 1.

When the sensor 11 comprises a single RADAR transmitter, radial information, i.e. distance information, about an object to be detected is available. In case of deployment of two RADAR transmitters in the sensor 11, further angular information (e.g. a polar or azimuthal angle) can be obtained. By installing three or more RADAR transmitters in the sensor 11, polar and azimuthal information on the target may further be gathered.

The RADAR transmitter(s) can be adapted to their environment by adjusting threshold levels for received signals such that only objects to be detected within a certain radius are accepted. Moreover, by defining a default target pattern as an offset, local circumstances such as steady poles or periodic events such as the passing of busses can be taken into account. Moreover, machine learning approaches can be used to train the charging device 1 for real parking or blocking events, and to distinguish from non-blocked or periodically blocked states.

If several ones of the charging device 1, or several RADAR transmitters, are used adjacently to one another in a known arrangement, the sensor information from these several ones of the charging device 1, or the several RADAR transmitters, can be combined to obtain more detailed information of the environment. E.g., the size of objects, which are located in between the parking spaces, can be interpreted and evaluated via the angular information and the distance information. This information can further be used to improve the accuracy and capabilities of a superior navigation system, e.g. to release the charging device 1 solely for small cars, bikes or motorbikes instead of large vehicles.

In an alternative embodiment, the sensor 11 comprises the RADAR transmitter(s) and one or more ultrasonic detectors, using phased array antennas, which allow for a high angular resolution employing a single electronic transmitting element. With such sensors 11, sufficient information can be collected to serve a machine learning algorithm for object recognition, comprising recognition of e.g. the type and/or the size of a car. Also, the information of these sensors could be combined from different adjacent ones of the charging device 1 to achieve a better significance.

The use of the at least one RADAR transmitter in the sensor 11 allows for a high degree of freedom in product design, especially regarding the housing 7 of the charging device 1. This is due to the at least one RADAR transmitter using electromagnetic waves in the radio frequency (RF) range, which easily pass through the housing 7 of the charging device 1. In particular, in a preferred embodiment, housing 7 does not have any apertures, which enables manufacturing closed housings 7. Furthermore, a closed housing 7 provides better protection against entering or intruding of water or humidity, as well as against vandalism. Furthermore, electromagnetic waves are insensitive to soiled or iced surfaces of the housing 7, or to a variety of environmental conditions including smog, fog, or wide temperature fluctuations.

In alternative embodiments, the sensor 11 may comprise mechanical contacts on or in the ground, optical sensors (infrared detectors, LIDAR), ultrasonic detectors, optical triangulation sensors, RADAR modules of a simple type, or more sophisticated imaging solutions such as cameras, stereoscopic cameras, time-of-flight (TOF) sensors (acoustical/optical), or spatially resolved ultrasound and/or RADAR based transmitters.

The first surrounding region may, in concrete terms, be a parking space or parking lot in front of the charging device 1. The parking space is defined relatively to the charging device 1 by an angular and a distance range. By monitoring the first surrounding region, defined by the angular and distance values, the detection device 9 can generate a first signal that enables a statement regarding at least one occupancy state of the first surrounding region. The first signal may thereby have a binary value, which is to be understood as the first signal accepting one of two values, for example zero (0) or one (1). In this embodiment, zero (0) can represent a first occupancy state, and one (1) a second occupancy state, wherein the first occupancy state can indicate a free, in particular non-occupied, first surrounding region, in other words an available parking space, and wherein the second occupancy state indicates an engaged, in particular an occupied, first surrounding region, in other words a non-available parking space.

In Figure 1, one single energy transferring device 3 is provided, for which reason correspondingly only one single surrounding region is monitored by the detection device 9. For monitoring the defined angular and/or the defined distance range, it is preferably provided that the sensor 11 comprises a plurality of transmitter and receiver devices, which in particular are each constructed as an array. Thereby, preferably a phase-controlled array can be implemented, by which beam pivoting, computed in particular analogously and/or software-based, can correspondingly be executed in a way corresponding to the first surrounding region. Based on and/or in consideration of a second signal, generated by the sensor 11 and possibly comprising a raw data signal and/or a previously processed data signal, the first signal is computed or generated by the detection device 9, and the occupancy state is thereby determined.

The second signal can preferably comprise information regarding at least the position, the size, the duration of stay, the movement, and/or the profile of the movement of the recognized or detected object. The detection device 9 can thus classify a detected object. Based on the duration of stay, for example, a cat crossing the first surrounding region can be ignored as being uncritical, or based on a size of, for example, a football located within the first surrounding region is recognized as not blocking the first surrounding region and ignored as being uncritical. Such objects therefore do not represent a predefined first object that can result in such an occupancy of the first surrounding region, that this surrounding region cannot be used by an energy receiver such as an electric vehicle.

The detection device is further, alternatively or additionally to the previous embodiments, configured to generate and/or transmit a third signal based on the first signal, wherein, for the third signal, in addition to the occupancy state, further at least a state of the energy transfer to the energy receiver can be considered. The third signal can, for example, thus comprise more than merely two states, and can, for example, be based on a charging operation already concluded or to a shortly concluded, have third state (for example "2"), which corresponds to a parking space that will shortly be available. This third signal can preferably be sent to a remote computer. The user, located elsewhere, can thereby be informed regarding the estimated availability, in particular by means of at least one mobile information service and/or by means of a mobile application ("APP").

The charging device 1 further comprises, alternatively or additionally to the previous embodiments, a first illumination device 13, which can at least partially illuminate at least one second and/or the first surrounding region. The first illumination device 13 comprises at least one first lighting means, in particular in the form of at least one light-emitting diode, and/or at least one first optic. By means of the first illumination device 13 thus provided, information can be preferably projected onto at least one surface of the first and/or second surrounding region. For example, this information can comprise images, such as logos, and/or texts. The first illumination device 13 can, alternatively or additionally, serve for single-coloured and/or multi-coloured illumination. The first and/or second surrounding region and/or further regions, in particular the surface of the ground, can thus be illuminated for illuminating the space in front of a parking space that often is dark in order to reduce the risk of stumbling between the charging device and the energy receiver.

The charging device 1 further comprises, alternatively or additionally to the previous embodiments, a second illumination device 15, which can at least partially and/or colouredly illuminate at least one region, in particular a surface region, of the housing 7 and/or the charging device 1. The second illumination device 15 comprises at least one second lighting means, in particular in the form of a second light-emitting diode, and/or at least one second optic. The safety and the comfort during the operation of the charging device can thus be increased, in particular in the case of illuminating a front region, in particular surface region, of the charging device 1 by means of the second illumination device 15.

The charging device further comprises, alternatively or additionally to the previous embodiments, at least one proximity sensor 17, which comprises at least one RADAR sensor. The proximity sensor 17 is configured to generate, depending on the presence and/or approximation of a third object in a third surrounding region of the charging device, at least one fourth signal. The third object may correspond to the first object and/or at least one user. The third surrounding region preferably is identical to, completely different from, or partially overlapping with the first and/or second surrounding region. Alternatively or additionally to the monitoring of the first and/or second surrounding region, an occurring or concluded approximation of the third object, in particular of a user, to the charging device 1 can thereby be determined.

In a preferred embodiment, the proximity sensor 17 comprises a continuous wave (CW) Doppler RADAR transmitter. The CW Doppler RADAR transmitter may preferably work in the frequency range of approximately 12Ghz - 40GHz, i.e. the Ku-band, K-band, and Kα.

The CW Doppler RADAR transmitters enable detecting the velocity of the third object, especially of persons or non-metallic objects, at a high signal-to-noise ratio (SNR). The CW Doppler RADAR transmitters further enable human-machine interaction, between the charging device 1 and a person approaching the charging device 1, in a pre-defined range of up to approximately 10 m.

The deployment of the CW Doppler LASER in the proximity sensor 17 furthermore provides the same advantages as the deployment of the FMCW RADAR transmitter in the sensor 11 that is comprised in the detection device 9.

The first and/or second illumination device 13, 15 can, alternatively or additionally to the previous embodiments, preferably depending on at least one value of the fourth signal, be switched. The first and/or second illumination device 13, 15 can change the luminosity and/or colour in case of determination of a third approximating third object. For example, the first and/or second illumination device 13, 15 can be switched from a first illumination state, which for example is a first dimmed illumination state, to a second illumination state, wherein the second illumination state is a second dimmed illumination state, having a luminosity larger than the first dimmed illumination state, and/or switched-on illumination state. Electric energy can thereby be saved as long as the charging device is not operated by a user. In other words, it is possible in a particularly advantageous manner, by means of the proximity sensor 17, to so-to-speak "awake" the charging device 1, when being approximated by a third object, in particular a user, from an idle state to an operating state.

Likewise, the charging device 1 can be switched from the operating state to the idle state when a third object moves away from the charging device 1. Electric energy may thus be saved when the charging device 1 is not used anymore by a user. The charging device 1 thus enables a more economical operation.

By providing the proximity sensor 17 independently of the detection device 9, the presence of first or second objects, on the one hand, may be determined separately from, on the other hand, the presence of third objects, and separate reactions are correspondingly possible.

The charging device 1 further comprises, alternatively or additionally to the previous embodiments, at least one indicator device 19 and/or at least one input device not shown in Figure 1. Information can preferably be displayed or indicated to the user by means of the indicator device 19. In a further aspect, information can be selected by the user.

In a preferred embodiment, the indicator device 19 is in particular touch-sensitive and in the form of a pixel-matrix display (or dot-matrix display). The indicator device 19 comprises, for emitting light within the housing 7 of the charging device 1, a directly controllable light source (not shown) such as an LED (light-emitting diode) or OLED (organic light-emitting diode); conventional, mercury vapor or fluorescent lamps; or an indirect light source such as a spatially switchable array of apertures (LCD/TFT) which is able to spatially control distributed light spots at defined positions or to control their degree of optical transmission.

The indicator device 19 further comprises, for guiding the light toward the housing 7, optical light guides (not shown) such as free-space apertures (such as shadow masks) of variable size and thickness, translucent light guides, lenses or lens systems for imaging/collimation. The optical yield can be further supported by implementing light guides made of translucent material to employ the effect of total internal reflection. The use of light guides further enables arranging the light sources at a distance to the surface of the housing 7, which enables higher protection of the light sources from environmental conditions such as sun light and temperature. Thus, the light sources are expected to have longer life times by slowing down the ageing process of e.g. LEDs or liquid crystals. Furthermore, light sources can be easily coupled to a thermal management system, e.g. to an air flow of a fan.

Integrating a large area search and/or functional illumination moreover allows the charging device 1 to be used as pedestrian or street illumination. Especially if LEDs or other highly efficient light sources are used in combination with a motion detector (Doppler RADAR, infrared, etc.), the illumination can be realized in a point-of-care fashion featuring high energy saving potential. Moreover, traffic guidance systems or public advertising spaces can be realized since the readability, especially of the display, is ensured even for large viewing distances.

Preferably, the light from the light source is collimated (parallel rays) to achieve the highest optical yield. Focusing optics such as collimation lenses or arrays of lenses/micro-lenses mounted on top of the light sources can alternatively or additionally used to obtain higher optical yield. Moreover, for collimated light rays, the length of the used light guide becomes less critical and can easily be adapted. Especially if many light sources are combined to form a graphical display (e.g. pixel or dot-matrix), planar optics can be combined with curved surfaces of the housing 7, which e.g. allows for the use of PCB-bound LED arrays or planar displays (LCD, TFT, OLED) with a variety of roundish structures of the housing 7. For instance, a planar LCD display is combined with a curved distance element to adapt the light source on the one side to the curved surface of the housing 7 on the other side. The distance elements work as a spatial filter to ensure a telecentric guidance of the light to the surface of the housing 7, ensuring homogenous appearance.

However, an easy implementation contains solely free-space elements (tight holes) to define the shape of optical elements on the front face. Shapes can e.g. be small dots to form a pixel matrix display (or dot-matrix display) for human-machine-interaction, large areas to support the user to find control elements or to find the charging device itself (search illumination), or to signalize the state of the machine (function illumination), e.g. by blinking in case the charging device is reserved. The pixels thus provided implement large and scalable displays, the sizes of single pixels (dots) of which are large compared to off-the-shelf LCD or TFT displays. Therefore, soiled, wet or icy surfaces of the housing 7 will have little or no influence on the readability of the device.

The indicator device 19 further comprises optical diffusors (not shown) such as solid opaque plastic elements, diffusor/straying foil, for scattering the light before passing through the housing 7. The use of the optical diffusors, in proximity to housing 7, results in two desired visual effects. Firstly, a wide viewing angle from outside the housing 7 is ensured. Secondly, the light source appears to be located right behind the housing 7, and the optical assembly loses its optical depth-effect. The optical diffusor can either be directly integrated in the housing 7, by roughening the inner or outer surface, or by using an additional (opaque) diffusor element (e.g. foil/diffusor film). The visual appearance to the user is defined by the aperture of the optical guiding system, which is blurred by the diffusor to mimic a light source, which is installed immediately behind the surface of the housing 7. Advantageously, the light source is thus at a distance from the outer surface, and thus less prone to be negatively impacted by temperature fluctuations, in particular better resists severe temperatures far below zero or very high temperatures resulting from sun irradiation.

The dot-matrix display may be switched to a heating mode, used to heat the charging device by switching to a permanently illuminated state. The advantage of such a heating mode is to a) prevent the LCD crystals to be negatively impacted by extremely low temperatures, potentially causing irreversible failure of the crystal chemistry, and to b) prevent various electrical and/or mechanical components to cool down to a temperature range lower than what is cleared as per the technical certification of the individual component. This plays a significant role when installing the charging device in arctic, that is extremely cold, environments. Heat guides may also be used for balancing extreme external temperatures.

The housing 7 may have a clear and/or polished surface, or a roughened surface, on the interior or exterior surface of the housing 7. A translucent housing 7 enables providing a housing 7 substantially without apertures, at least on the visible part of the housing when mounted, which makes the charging device 1 more robust against environmental exposure. Scratching, i.e. vandalism, is less critical due the principle of diffusing or scattering light in proximity to the surface of the housing 7.

Alternatively or additionally, it is obvious that the indicator device 19 and/or the input device are furthermore formed in the form of, and/or comprise(s) a second capacitive sensor , further enabling an operation of the charging device, in particular an execution of recognition of gestures, in particular of a user, by means of the second capacitive sensor , such that the charging device 1 and/or the indicator device 19 and/or input device is operable by a corresponding control based on gestures. The indicator device comprises at least a third lighting device, having in particular at least a third light-emitting diode as well as a housing portion comprised by the housing 7. The housing portion thereby is, in comparison to at least an adjacent housing portion, configured to be more thin-walled and thus semi-transparent and trans-illuminable from behind by the third illumination device. Alternatively or additionally, the indicator device 19 can, depending on at least one value of the fourth signal, corresponding to the determination of an object having approximated or approximating the charging device, be brought from a first operation state into a second operation state, in other words from an inactive into an active operation state.

The charging device 1 further comprises, alternatively or additionally to the previous embodiments, at least one sensing device 21. The sensing device 21 thereby comprises preferably at least one RFID module for execution, initialization, preparation, and/or conclusion of an authentication and/or authorization of the user and/or at least one payment transaction. It is in particular possible, by means of the sensing device 21, to recognize an RFID card, credit card, and/or smart phone passed along the sensing device 21, and to read or to obtain, by means of a communication via a corresponding radio interface, the necessary card data or information. Alternatively or additionally, the process can be accompanied by outputs and/or user inputs on the indicator device 19. For example, the price for the energy, in particular the charging current, per minute can preferably be indicated or displayed by means of the indicator device 19 before the RFID card, the credit card, and/or the smart phone has been passed along the sensing device 21, and subsequently the question, whether the charging operation is to be initiated, can be indicated or displayed. The user can thereupon respond to this question via the, in particular touch-sensitive, indicator device 19 in a positive (i.e. for initiating the charging operation) or a negative way (i.e. for terminating or not beginning the charging operation).

When the energy transferring device 3, as in this embodiment, comprises at least one charging cable, the charging device 1 can further comprise, alternatively or additionally to the previous embodiments, at least one cable retracting device, not shown in Figure 1. The cable retracting device winds the cable autonomously onto the cable drum. The cable is thus always available to the user at the required length and does not contact the ground. A contamination of the cable can thus be effectively prevented. By means of the cable retracting device, the cable is automatically wound up after use.

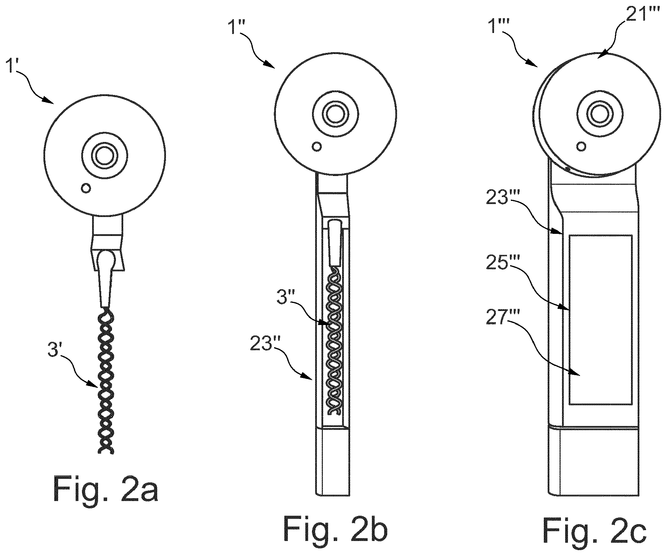

Figure 2a shows a charging device 1' according to the invention, referred to with 1', in a second embodiment. Features that correspond to those of the charging device 1 are referenced with the same, but primed reference signs.

Figure 2b further shows a charging device 1" referred to as a whole by 1", in a third embodiment. Features that correspond to those of the charging device 1 are referenced with the same but twofold primed reference signs.

As shown in Figures 2a and 2b, the charging cable can, alternatively or additionally to the previous embodiments, furthermore have at least in sections the form of a spiral, whereby a cable retracting device preferably is dispensable, due to preventing contact with the ground by the cable in a different manner than by be the cable retracting device.

The spirally formed cable, shown in Figure 2a in the second embodiment, is arranged to hang freely at the charging device 1'. A charging device 1', corresponding to Figure 2a, safes space and is particularly well suited for surroundings that already are protected against the weather, and/or that are accessible exclusively by known persons, as in the case of private underground garages or single garages.

At locations, which are less well protected against the weather, e.g. in the case of carports or non-roofed parking lots, a charging device 1" according to the third embodiment shown in Figure 2b, can be employed. The energy transferring device 3" is in this case at least in regions surrounded by a conservation housing 23" for enabling secure storing of the energy transferring device 3" during non-usage.

Figure 2c shows a charging device 1'" according to the invention, referred to as a whole by 1'", in a fourth embodiment. Features corresponding to those of the charging device 1 are referenced with the same, but threefold primed reference signs.

According to a fourth embodiment, the energy transferring device is completely arranged within the conservation housing 23"', in particular the housing of the charging device 1"', and is only released when required to a correspondingly authorized user.

The charging device 1 preferably comprises, alternatively or additionally to the previous embodiments, at least one clearance device 25"'. This clearance device 25'" is in particular configured to clear or release, depending on the result of an authentication and/or authorization, executed in particular by means of the sensing device 21'", of the user, the energy transferring device, not shown in Figure 2c due to not being released, for use by the user. For example, the clearance device 25'" can, as chosen, release or not release, in particular close, an opening region 27'" of the conservation housing 23'".

The user thereupon can, after conclusion of the authentication and/or authorization, and in particular after subsequent conclusion of the opening of the opening region 27'" by means of the clearance device 25'", extract from the charging device 1"', in particular pull out of the charging device 1'", and couple, in particular by means of the connecting device, with a corresponding energy receiving device of the energy receiver, the energy transferring device. In lack of successful authentication and/or authorization the energy transferring device is not cleared or released.

The charging device 1'" according to the fourth embodiment thus is particularly well suited for employment in public spaces, at which the energy transferring device is to be protected against vandalism and to be cleared or released solely to authorized users, and/or for employment at locations that are not or not sufficiently protected against the weather.

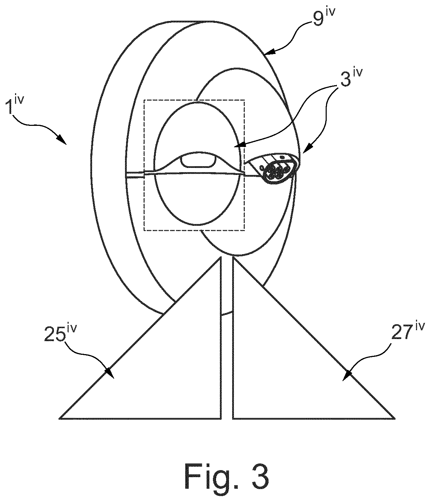

Figure 3 shows a charging device 1^{iv}, as a whole referred to with 1^{iv}, in a fifth embodiment. Features corresponding to those of the first charging device 1 are referenced with the same but fourfold primed reference signs.

In contrast to the charging device 1, 1', 1", and 1'", of Figure 1 and Figures 2a- charging, the charging device 1^{iv} of Figure 3 comprises two energy transferring devices 3^{iv}. Accordingly, two first surrounding regions are monitored by the detection device 9iv, wherein the first two surrounding regions preferably correspond to two parking space options in front of the charging device 1^{iv}.

Each of the two first surrounding regions is defined relative to the charging device 1^{iv} by an individual angular and distance range. In Figure 3, merely for illustrative reasons, a first and second beam lobe 29^{iv}, 31^{iv}, are indicated, which each serve to monitor one of the two first surrounding regions.

Preferably, both beam lobes 29^{iv}, 31^{iv} can, according to choice, be generated either by a single sensor of the detection devices 3^{iv}, or are two single sensor s within the detection devices 3iv used to this end, wherein each sensor is responsible for one of the two beams lobes 29^{iv}, 31^{iv}.

In any case, the explanations, made above in connection with the detection device 3, and the options for combination with further features according to the invention are analogously valid for the detection device 3iv and do therefore not have to be repeated here in detail.

Such a charging device according to the invention can preferably be employed in the application domain of electric mobility. The charging device can preferably have a power of 3,7 kW, 11 kW, 22 kW and/or up to 400 kW. As connecting device, in particular plug, type2 plugs, CSS, and/or CHaDemo plugs are employed.

The features disclosed in the previous description, in the claims and in the drawings, can be both as such and in any combination essential for the invention in the different embodiments.

### Reference signs

- 1, 1', 1", 1"', 1^{iv}: charging device
- 3, 3', 3", 3^{iv}: power transferring device
- 5: connecting device
- 7: housing
- 9, 9iv: detection device
- 11: sensor
- 13: illumination device
- 15: illumination device
- 17: proximity sensor
- 19: indicator device
- 21, 21"': sensing device
- 23", 23'": conservation housing
- 25'": clearance device
- 27"': opening region
- 29^{iv}: beam lobe
- 31^{iv}: beam lobe

## Claims

1. A charging device (1, 1', 1", 1'", 1^{iv}) for transferring electrical energy to at least one energy receiver, the charging device having
at least one energy transferring device (3, 3', 3", 3^{iv}) for coupling with a corresponding energy receiving device of the energy receiver,
**characterized in that** the charging device (1, 1', 1", 1"', 1^{iv}) further comprises
at least one detection device (9, 9iv) that is configured to determine the presence of at least one pre-defined first object in at least one first surrounding region of the charging device (1, 1', 1", 1'", 1^{iv}),
**characterized in that** the detection device (9, 9iv) comprises at least one sensor (11), wherein the at least one sensor is an image recognition device.

2. The charging device of the preceding claim, **characterized in that** the at least one sensor is an optical image recognition device.

3. The charging device of the preceding claims, wherein the image recognition device comprises at least one first camera, in particular one first stereoscopic camera.

4. The charging device (1, 1', 1", 1'", 1^{iv}) according to one of the preceding claims, **characterized in that** the detection device (9, 9iv) is configured to compute and/or to generate, dependently on a second object, recognized within the first surrounding region, at least one first signal regarding at least one occupancy state of the first surrounding region by the at least one first object.

5. The charging device (1, 1', 1", 1"', 1^{iv}) according to claim 4, **characterized in that**, when computing and/or generating the first signal, at least one second signal is evaluable and/or useable, which is generated by the first image recognition device, wherein the second signal comprises information regarding the second object, which is in the first surrounding region, and/or, for recognition of the occupancy of the first surrounding region by the at least one first object, the second signal is comparable with at least one predetermined value of the at least one first object.

6. The charging device according to one of the preceding claims, **characterized in that** a plurality of first objects, differing in a geometric and/or dynamic characteristic, is recognizable by means of the detection device.

7. The charging device according to one of the preceding claims, **characterized in that** a plurality of the first surrounding region is provided, and/or at least one of the plurality of the first surrounding region is defined by at least one angular range about, and/or distance range from, the charging device (1, 1', 1", 1'", 1^{iv}), the detection device (9, 9iv), the sensor (11), and/or the camera.

8. The charging device of claim 4 or 5, **characterized in that** the presence of the at least one first object in the at least one first surrounding region is recognizable by the detection device (9, 9iv) independently from further first surrounding regions.

9. The charging device according to one of the preceding claims, **characterized in that** the detection device is configured such that the size of the at least one first surrounding region, in particular the angular range and/or the distance range, monitored by the detection device and/or the sensor, is variable, and/or the number of the at least one first surrounding region, monitored by the detection device and/or the sensor, is variable.

10. The charging device according to one of the preceding claims, **characterized in that** the energy transferring device (3, 3', 3", 3^{iv}) further comprises at least one charging cable, having at least one connecting device (5) for directly or indirectly establishing at least one electrically conducting connection for energy transfer between the charging device (1, 1', 1", 1'", 1^{iv}) and the energy receiver.

11. The charging device (1, 1', 1", 1"', 1^{iv}) of one of the preceding claims, **characterized by** at least one controlling and/or regulating device, which in particular is comprised by the detection device (9, 9iv), and which is configured to generate, and/or transmit to at least one remote computer and/or at least one local receiver, a third signal, dependently on the determined occupancy state and/or of the at least one state of the energy transfer to the energy receiver.

12. The charging device (1, 1', 1", 1"', 1^{iv}) of one of the preceding claims, **characterized in that** the charging device (1, 1', 1", 1'", 1^{iv}) further comprises at least one first illumination device (13) for the at least partial and/or coloured illumination of at least one second surrounding region; and/or **in that** the charging device (1, 1', 1", 1'", 1^{iv}) comprises at least one second illumination device (15) for the at least partial and/or coloured illumination of at least one region of the housing (7), a supporting structure, on which the charging device is arranged, and/or the charging device (1, 1', 1", 1'", 1^{iv}).

13. The charging device (1, 1', 1", 1"', 1^{iv}) of claim 12, **characterized in that** the first illumination device (13) comprises at least one first lighting means and/or at least one first optic; and/or that the second illumination device (15) further comprises at least one second lighting means and/or at least one second optic.

14. The charging device of claim 12 or 13, **characterized in that**, by means of the first illumination device and/or the second illumination device (13, 15), at least one first information is projectable onto at least one surface of the first surrounding region, of a plurality of first surrounding regions, of the supporting structure, of the second surrounding region, and/or of the charging device (1, 1', 1", 1"', 1^{iv}), wherein the information comprises at least partially at least one image element and/or at least one text element, and/or the information is receivable and/or retrievable from at least one remote computer by means of the controlling and/or regulating device.

15. The charging device (1, 1', 1", 1"', 1^{iv}) of one of the preceding claims, **characterized in that** the charging device (1, 1', 1", 1"', 1^{iv}) comprises at least one proximity sensor (17), comprised in the detection device, the proximity sensor being configured to generate at least one fourth signal, dependently on the presence and/or approximation in a third surrounding region of the charging device (1, 1', 1", 1'", 1^{iv}) of at least one third object that corresponds to the first object and/or at least one user.

16. The charging device of claim 15, **characterized in that** the proximity sensor (17) comprises at least one second image recognition device, in particular for optical image recognition; wherein preferably the second image recognition device comprises at least one second camera, in particular one second stereoscopic camera.

17. The charging device of one of the claims 12 to 16, **characterized in that** the first illumination device and/or the second illumination device (13), preferably dependently on at least one value of the fourth signal and/or the determination of a third object, having approximated or approximating in the third surrounding region the charging device (1, 1', 1", 1"', 1^{iv}), is/are switchable from a first illumination state into a second illumination state.
